(19) Europäisches Patentamt
European Patent Office
Office européen des brevets

(11) **EP 2 544 353 B1**

(12) **EUROPEAN PATENT SPECIFICATION**

(45) Date of publication and mention of the grant of the patent:
**03.08.2022 Bulletin 2022/31**

(21) Application number: **10847068.3**

(22) Date of filing: **20.12.2010**

(51) International Patent Classification (IPC):
*H02M 7/48* (2007.01)　　*H02H 7/085* (2006.01)
*H02H 7/122* (2006.01)　　*H02P 27/06* (2006.01)
*H02P 29/024* (2016.01)　　*H02M 1/32* (2007.01)
*H02M 1/36* (2007.01)　　*H02M 7/5387* (2007.01)
*H02P 29/032* (2016.01)　　*H02P 29/60* (2016.01)

(52) Cooperative Patent Classification (CPC):
**H02M 1/32; H02P 27/06; H02P 29/027; H02P 29/032; H02P 29/60;** H02M 1/36; H02M 7/53875

(86) International application number:
**PCT/JP2010/072879**

(87) International publication number:
**WO 2011/108172 (09.09.2011 Gazette 2011/36)**

(54) **INVERTER AND OVERLOAD PROTECTION METHOD**

INVERTER UND ÜBERLASTUNGSSCHUTZVERFAHREN

ONDULEUR ET PROCÉDÉ DE PROTECTION CONTRE LES SURCHARGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2010 JP 2010048994**

(43) Date of publication of application:
**09.01.2013 Bulletin 2013/02**

(73) Proprietor: **Hitachi Industrial Equipment Systems Co., Ltd.**
**Chiyoda-ku**
**Tokyo 101-0022 (JP)**

(72) Inventors:
• **IBORI Satoshi**
**Narashino-shi**
**Chiba 275-8611 (JP)**
• **NAKAMURA Atsuhiko**
**Narashino-shi**
**Chiba 275-8611 (JP)**

• **TOMITA Hiroyuki**
**Narashino-shi**
**Chiba 275-8611 (JP)**

(74) Representative: **Mewburn Ellis LLP**
**Aurora Building**
**Counterslip**
**Bristol BS1 6BX (GB)**

(56) References cited:
GB-A- 2 119 591　　JP-A- 5 022 837
JP-A- 6 253 593　　JP-A- 9 215 388
JP-A- 9 282 020　　JP-A- 11 024 762
JP-A- 11 024 762　　JP-A- 2004 229 491
US-A1- 2007 103 833

• DAVID R BOOTHMAN ET AL: "Thermal Tracking-A Rational Approach to Motor Protection", IEEE TRANSACTIONS ON POWER APPARATUS AND SYSTEMS, IEEE INC. NEW YORK, US, vol. 82, no. 5, 1 September 1974 (1974-09-01), pages 1335-1344, XP011161443, ISSN: 0018-9510

EP 2 544 353 B1

**Description**

TECHNICAL FIELD

The present invention relates to an inverter and an overload protection method for accurate discrimination of an overload state.

BACKGROUND ART

An electronic heat time limit characteristic is built into a power conversion apparatus (an inverter) that outputs variable voltage variable frequency AC power to control the speed of an AC motor in advance in order to protect the AC motor against overload-caused heat generation.

The above-mentioned electronic heat time limit characteristic is adapted to detect an electric current of the AC motor and to discriminate an overload state of the AC motor in accordance with the magnitude of the above current value so as to protect the motor by an electronically integrating integration type heat time limit characteristic. The integration type heat time limit characteristic is configured such that integration is performed for an arbitrary time, for example, 10 minutes and when 10 minutes have elapsed, its integrated value is cleared. A conventional electronic heat time limit characteristic performs only integration, in which in the case that an overload state occurs several times in 10 minutes, when N1 is an integrated value in a first overload state, N1 is maintained until a second overload state comes, and when N2 is an integrated value in the second overload state, it is accumlatively added (N1 + N2) to the integrated value in the first overload.

Thus, in the case that a time interval (the above 10 minutes) from the first overload to the second overload in the above AC motor is long, since the AC motor is determined to be abnormally overloaded from the accumlatively added (N1 + N2) value regardless of the fact that the AC motor is actually cooled by heat radiation and its temperature is lowered in light-load between the first overload and the second overload, an overload detecting operation is performed hastily (overprotection) and sudden stop of the AC motor occurs. Since the operation of equipment is stopped during overheat protection stop, it has been a factor that would greatly hinder productivity.

In Patent Document 1, it is disclosed that the sum of a value obtained by multiplying a square of an output current by a certain coefficient and a value obtained by multiplying an absolute value of the output current by an input voltage, a switching frequency and another certain coefficient is figured out and the sum is used as an approximate value of an inverter unit semiconductor switching loss of a PWM inverter to detect overload of the semiconductor switching element in order to prevent it from being overprotected due to hasty overload detection.

In patent Document 2, it is described that in the case that power supply is temporarily cut off and is then restored, when a power source abnormality detection circuit detects an abnormal state of the power source for surer protection of a driving object, the temperature of a cooling fin of an inverter is read and stored, and when the power source is reset and is then input again, a temperature integrated value is arithmetically operated on the basis of the temperature of the cooling fin of the inverter immediately after it has been input again and the stored temperature of the cooling fin to set it as an initial value after recovery of the power source. Then, in the paragraph (0022), it is described that an appropriate value can be set as a temperature integrated value θSUM corresponding to the initial value of the temperature of a motor after the power source has been input again.

GB2119591A discloses a power inverter with overload protection apparatus.

JP6253593A discloses an inverter controller, wherein an output signal from an output current detecting means representative of the operating state of a load is converted by an operational processor into a temperature rise signal of a motor depending on the magnitude of load of a load unit and the temperature rise signal is time integrated by an integrator. A comparator compares an output signal from the integrator with an allowable temperature level preset for the type of insulation of the motor and delivers a voltage signal corresponding to the difference to a logic circuit. When the difference signal drops below zero, i.e., when the allowable temperature is exceeded due to overload, the logic circuit limits or stops operation of main circuit element in the inverter.

JP5022837A discloses a portable power supply, wherein a counter counts up 1/16 frequency divided clock pulse signals under overload state whereas counts down clock pulse signals, subjected to 1/32 frequency division for the count under overload state, if the overload state is released prior to interruption of power supply. Consequently, it takes double time for count down operation as compared with count up operation. If overload state takes place in the way of count down and the logical level of signal goes 1, logical levels at all output terminals go 1 within a time reverse proportional to the count down time, and the output current from power supply is interrupted after duration of overload state for half of count down time.

PRIOR ART DOCUMENT

PATENT DOCUMENT

Patent Document 1: Japanese Patent Application Laid-Open No. 2004-173347
Patent Document 2: Japanese Patent Application Laid-Open No. 2007-166696

SUMMARY OF THE INVENTION

PROBLEMS TO BE SOLVED BY THE INVENTION

However, in prior art described in Patent Document 1, nothing is disclosed with respect to protection of an AC motor, heat radiation from the inverter is not taken into consideration in overload detection and hence it is not clear as to whether accurate overload is grasped. Patent Document 2 is adapted to take in an actual temperature in setting the initial value when the power supply is temporarily cut off and is then recovered. Although it is described that the temperature integrated value is subtracted in order to obtain the initial value, a clear description as to control of addition and subtraction confirming to the actual temperature by heat radiation is not made.

The present invention aims to provide an inverter and an overload protection method having an accurate electronic heat time limit characteristic in which actual temperature rise and drop of a speed-controlled motor in overload and normal load of the motor are taken into consideration.

MEANS FOR SOLVING THE PROBLEMS

According to a first aspect of the present invention there is provided an inverter as specified in claim 1.

The inverter according to the first aspect of the present invention may optionally be as specified in any one of claims 2 to 6.

According to a second aspect of the present invention there is provided an overload protection method as specified in claim 7.

The overload protection method according to the second aspect of the present invention may optionally be as specified in any one of claims 8 to 12.

EFFECT OF THE INVENTION

According to the present invention, an overload state can be accurately discriminated conforming to actual rise and drop in load temperature in overload operation and normal operation and hence sudden stop of equipment due to overprotection can be prevented.

BRIEF DESCRIPTION OF THE DRAWINGS

[Fig. 1] Fig. 1 is a main circuit configuration diagram of a power conversion apparatus.
[Fig. 2] Fig. 2 is one diagram of an operating state in an electronic counter having only an adding function.
[Fig. 3] Fig. 3 is another diagram of an operating state in an electronic counter having only an adding function.
[Fig. 4] Fig. 4 is a diagram of an operating state in an electronic counter of an embodiment 1 of the present invention.
[Fig. 5] Fig. 5 is a diagram of an operating state in an electronic counter of an embodiment 2 of the present invention.
[Fig. 6] Fig. 6 is a diagram showing weighted values upon subtraction of an embodiment of the present invention.
[Fig. 7] Fig. 7 is an operational flowchart of an electronic counter to which subtraction is added similarly.

MODES FOR CARRYING OUT THE INVENTION

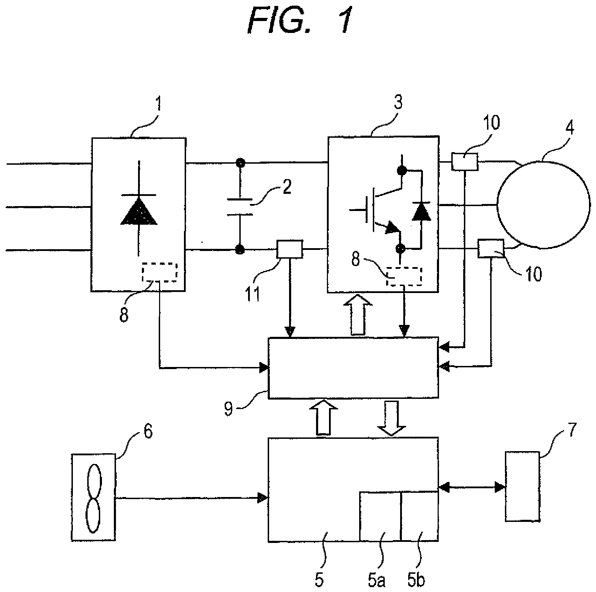

Fig. 1 is a main circuit configuration diagram of a power conversion apparatus of an embodiment of the present invention. 1 is a power rectifier that rectifies commercial AC power and converts it into DC power, 2 is a smoothing capacitor, 3 is a power inverter that converts DC power to AC power having an arbitrary voltage and an arbitrary frequency, and 4 is an AC motor that is speed-controlled with AC power having an arbitrary voltage and an arbitrary frequency. 6 is a cooling fan that cools power modules in the power rectifier and the power inverter.

7 is a digital operation panel through which various pieces of control data of the power conversion apparatus can be set and changed, and abnormal state and monitor display can be made. 8 is a temperature detector disposed within each of power semiconductor modules of the power rectifier 1 and the power inverter 3. 9 is a drive circuit that drives a switching element of the power inverter 3, 10 is a current detector, and 11 is a resistor for current detection in a DC circuit. For example, a line current of the AC motor 4 can be detected by the current detector 10 so as to determine an overload state of the AC motor in accordance with its detection value Im. It goes without saying that it is possible to detect the current of the AC motor 4 also by the resistor 11 for current detection disposed in the DC circuit.

5 is a control unit that controls a switching element of the power inverter 3 and generally controls the power conversion apparatus which is configured as mentioned above, and it is configured to perform necessary control processing in accordance with various pieces of control data input through the digital operation panel 7 and a detection value (described later) from the current detector 10. Since the operation of an inverter which is the above-mentioned power conversion apparatus is well known, detailed description thereof will be omitted.

The control unit 5 is configured by a CPU and a memory and determines an overload state of the AC motor 4 from the magnitude of the detected current value Im of the current detector 10 to protect the AC motor 4 by stopping the inverter. Specifically, the control unit 5 has an adding/subtracting unit 5a that electronically performs addition on a built-in electronic counter (not shown) with a weighted value according to an electric current detected by the current detector in overload operation of the AC motor 4, and performs subtraction from an integrated value in the electronic counter obtained by addition in the overload, with a weighted value commensurate with the current squared times time of the electric current detected by the current detector in the overload when the AC motor is not in overload operation.

In addition, the control unit 5 has an electronic heat time limit unit 5b. The heat time limit unit 5b stores an electronic heat time limit characteristic and sends an inverter stop signal to the drive circuit 9 to stop the AC motor 4 when an integrated value of the electronic counter in the adding/subtracting unit 5a has reached a predetermined value involving the heat time limit characteristic. The predetermined value of the electronic counter is determined by an electronic heat time limit characteristic line and it becomes possible to cope with AC motors of various capacities by changing the characteristic line under the operation of the digital operation panel 7.

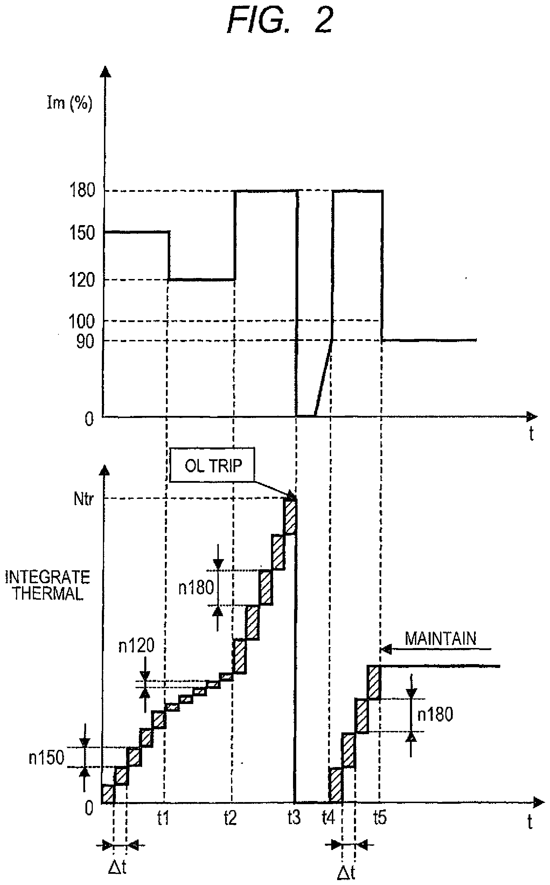

An operating state of an electronic counter to which only an adding function is added will be described with reference to Fig. 2. The vertical axis on an upper half part is a detected current ratio Im (%) relative to a rated current value of the AC motor 4 and the horizontal axis is a time. The vertical axis on a lower half part is an integrated value of the electronic counter and the horizontal axis is a time.

Im = 100% means that the AC motor is under a rated load, and when it exceeds 100%, the AC motor is determined to be in overload operation. A weighted value nIm upon addition of the electronic counter which is previously disposed within the inverter performs addition is determined corresponding to the detected current ratio Im (%) of the AC motor on the vertical axis in order to protect the AC motor against temperature rising due to overload.

For example, in Fig. 2, a weighted value upon addition of the electronic counter in an overload period (an interval 0-t1) during which the detected current ratio of the AC motor 4 is 150% continues to be added with a weighted value of a heat time limit numerical value n150 which is previously set every detection time $\Delta t$. An accumulative integrated value in this interval comes to Nt = n150*t1/$\Delta t$. Then, a weighted value upon adding of the electronic counter in an overload period (an interval t1-t2) during which the detected current ratio is 120% continues to be added with a weighted value of a heat time limit numerical value n120 which is previously set every detection time $\Delta t$. An accumulative integrated value in this interval comes to Nt = n120* (t2 - t1) /$\Delta t$. Further, a weighted value upon addition of the electronic counter in an overload period (an interval t2-t3) during which the detected current ratio is 180% continues to be added with a weighted value of a heat time limit numerical value n180 which is previously set every detection time $\Delta t$. An accumulative integrated value in this interval comes to Nt = n180*(t3 - t2)/$\Delta t$.

As a result, since an integrated value of the electronic counter which has been accumulated in the interval 0-t3 comes to the sum total of added values in the respective intervals, it comes to Nt = {n150*t1/$\Delta t$ + n120*(t2 - t1)/$\Delta t$ + n180*(t3 - t2)/$\Delta t$}.

It is configured such that an overload trip (OL Trip) works for protecting the AC motor against overload at a time point t3 when the accumlative electronic counter integrated value Nt has reached a numerical value Ntr indicated in a previously determined electronic heat time limit characteristic so as to stop the operation of the inverter. The integrated value of the counter is cleared simultaneously with shutdown of the inverter.

Then, since a weighted value upon addition of the electronic counter in an overload period (an interval t4-t5) during which the detected current ratio is 180% continues to be added with the weighted value of the heat time value n180 which is previously set every detection time $\Delta t$ and the overload state is released (the detected current ratio is not more than 100%) in an interval between t5 and the next succeeding one, addition of the electronic counter is stopped and the accumlative electronic counter integrated value is maintained constant in the interval between t5 and the next succeeding one. In the above-mentioned case, the integrated value of the electronic counter which is maintained comes to Nt = {n180*(t5 - t4)/$\Delta t$}.

Here, the heat time limit numerical value used as the previously set weighted value indicates a correlation between heat generation and time involving temperature rising of the AC motor. Since the larger the current (the detected current ratio Im) flowing through the AC motor is, the larger heat generation per unit time within the AC motor becomes, the weighted value of the heat time limit numerical value nIm is also set large. In opposition, since the smaller the current (the detected current ratio Im) flowing through the AC motor is, the smaller heat generation per unit time within the AC motor becomes, the weighted value of the heat time limit numerical value nIm is also set small. That is, if the current (the detected current ratio Im) flowing through the AC motor is large, heat generation per unit time within the AC motor per time will be increased. Thus, it continues to be added with a weighted value of the heat time numerical value nIm commensurate with an increase in heat actually generated within the AC motor.

Then, it is previously set such that, for example, when an overload period during which the detected current ratio is 150% lasts for 60 (s), overload protection of the AC motor works to stop the device, and the electronic heat time limit characteristic is previously configured such that when the overload period during which the detected current ratio is 120% lasts for 200 (s), overload detection of the AC motor works to stop the device, by being added with the above weighted value. That is, the larger the current (the detected current ratio Im) flowing through the AC motor is, the larger the weighted value added becomes and the larger the added value of the electronic counter becomes. Thus, an overload protecting operation time is reduced. The weighted value to be added and the overload protecting operation time are previously set to be inversely proportional to each other.

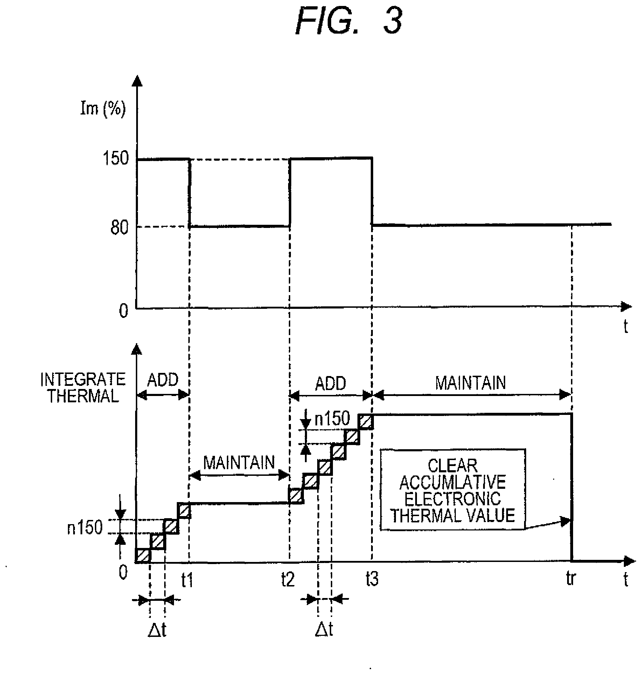

Fig. 3 is another example showing an operating state of the electronic counter. A weighted value upon addition of the electronic counter in an overload period (an interval: 0-t1)during which the detected current ratio of the AC motor is 150% continues to be added with a weighted value of a heat time limit numerical value n150 which is previously set every detection time $\Delta t$, and the integrated value of the electronic counter at the time t1 is maintained as it is in a period (an interval t1-t2) during which the detected current ratio is 80% (not more than 100%). Thus, the maintained accumulated integrated value of the electronic counter in the interval t1-t2 comes to Nt = n150∗t1/$\Delta t$.

Next, a weighted value upon addition of the electronic counter in an overload period (an interval: t2-t3) during which the detected current ratio of the AC motor is 150% continues to be added to the integrated value {n150*t1/$\Delta t$} with a weighted value of the heat time limit numerical value n150 which is previously set every detection time $\Delta t$, and the maintained accumulative integrated value of the electronic counter at the time t3 comes to Nt = {n150*t1/$\Delta t$} + n150*(t3 - t2)/$\Delta t$. The accumulative integrated value of the electronic counter at the time 3 is maintained as Nt = {n150*t1/$\Delta t$ + n150* (t3 - t2)/$\Delta t$}.

Then, when a count time t = Ts of the electronic counter reaches a time tr which is previously determined, the accumulative integrated value Nt which has been maintained so far in the electronic counter is cleared (reset) and addition is again started from zero in an overload operation state.

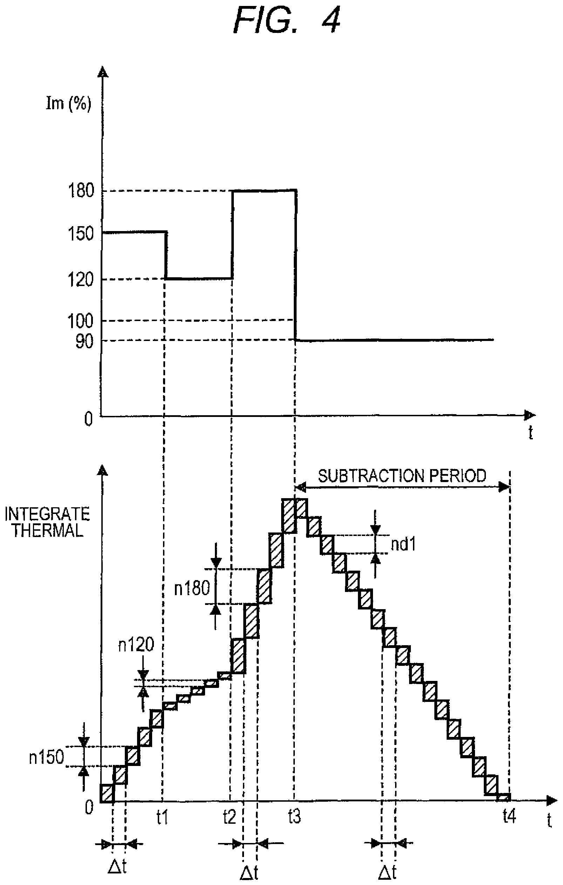

Fig. 4 shows an operating state of an electronic counter to which a subtracting function is added, showing an embodiment 1 of the present invention.

A rated output from the motor 4 is defined such that a time-dependent change in temperature rising is obtained from load time characteristics of the motor and a temperature rise at an arbitrary time does not exceed an allowable temperature rise limit. Thus, a current mean square method is generally known as a method of obtaining it as a constantly continuing load under which heat generation which is equal to mean heat generation in one cycle of load occurs.

Although there exists a period during which the actual temperature rise of the motor exceeds the temperature rise limit in determining the rated output such that the mean temperature rise of the motor does not exceed the temperature rise limit which is defined in the standard specification, in the case that alternation of an overload period and a light load period occurs within a considerably short time as compared with a heat time constant of the motor, it is thought that a duration of excessive temperature rise is short and it just slightly exceeds the temperature rise limit.

For example, in an induction motor, when a terminal voltage is constant, an output is approximately proportional to a load current. On the other hand, since copper loss is proportional to the square of the load current, the copper loss is proportional to the square of the output consequently. In a continuous rating open-type motor or the like, since copper loss is relatively large for iron loss and mechanical loss, temperature rise can be considered on the assumption that all losses are proportional to the square of the output.

In Fig. 4, a weighted value upon addition of the electronic counter in an overload period (an interval 0-t1) during which the detected current ratio is 150% continues to be added with a weighted value of a heat time limit numerical value n150 which is previously set every detection time $\Delta t$, and the accumulative integrated value of the electronic counter at the time t1 comes to Nt = n150∗t1/$\Delta t$. In addition, in an overload period (an interval t1-t2) during which the detected current ratio is 120%, it is added to the accumulative integrated value {n150*t1/$\Delta t$} of the electronic counter in the interval 0-t1 and hence the accumulative integrated value of the electronic counter at the time t2 comes to Nt = {n150*t1/$\Delta t$} + n120*(t2 - t1)/$\Delta t$.

Further, a weighted value upon addition of the electronic counter performs in an overload period (an interval t2-t3) during which the detected current ratio is 180% is added to the above accumulative integrated value {n150*t1/$\Delta t$ + n120*(t2 - t1)/$\Delta t$} with a weighted value of a heat time limit numerical value n180 which is previously set every detection time $\Delta t$, and the accumulative integrated value of the electronic counter at the time t3 comes to Nt = {n150*t1/$\Delta t$ +

n120*(t2 - t1)/Δt} + n150*(t3 - t2)/Δt.

Here, if the current (the detected current ratio) flowing through the AC motor 4 is large, heat which is generated within the AC motor per unit time will be increased, so that a weighted value upon addition is also set large. In opposition, if the current (the detected current ratio) flowing through the AC motor is small, heat which is generated within the AC motor per unit time will be decreased, so that the weighted value upon addition is also set small.

Next, in a period (an interval between t3 and the next succeeding one) during which the detected current ratio is 90% (not more than 100% and not in overload operation), it is subtracted from the accumulative integrated value Nt = {n150*t1/Δt + n120*(t2 - t1)/Δt + n150*(t3 - t2)/Δt} with a weighted value of a previously set heat time limit numerical value nd1.

Next, a weighted value in this subtraction will be described. In the period 0-t3 for addition, it is in a 150% overload state (a detected current ratio: $I_{150}$) in the interval 0-t1, in a 120% overload state (a detected current ratio: $I_{120}$) in the interval t1-t2, and in a 180% overload state (a detected current ratio: $I_{180}$) in the interval t2-t3, and only addition is executed with the heat time limit characteristic of the electronic counter. Then, in the interval between t3 and the next succeeding one, since the overload is released and the detected current ratio is reduced to 90% (not more than 100%), temperature rise of the AC motor 4 due to the overload state in the interval from 0 up to t3 is stopped and the temperature drops by heat radiation.

Therefore, in this embodiment, in an interval during which the temperature of the AC motor 4 drops, the integrated value which has been accumulated so far is not maintained and is subtracted from the accumulative integrated value in the interval from 0 up to t3 in accordance with a weighted value commensurate with a square time product of the detected current ratio in overload operation in the interval from 0 up to t3, conforming to the actual condition of temperature drop of the AC motor.

The square time product Ie of the detected current effective value in the interval 0-t3 is expressed by the following formula (1).

$$Ie = [\{I_{150}^2 * t1 + I_{120}^2 * (t2 - t1) + I_{180}^2 * (t3 - t2)\}/t3]^{1/2} \ \dots(1)$$

That is, it is a square root obtained by squaring the detected current effective value in each interval (the interval 0-t1, the interval t1-t2, and the interval t2-t3), adding values each being obtained by multiplying this value by the time in each interval per interval, and dividing it by a time of the entire operating interval. The concept of the square product of the current effective value is used as a performance index in a trial calculation involving heat of the motor as a rotor.

Subtraction from the above accumulative integrated value in the period 0-t3 is performed with a weighted value nd1 for subtraction which is previously determined for the square time product Im obtained as mentioned above, and the integrated value is expressed by the following formula.

$$Nt = \{n150 * (t1/\Delta t) + n120 * (t2 - t1)/\Delta t + n180 * (t3 - t2)/\Delta t\} -$$

$$nd1 * (t4 - t3)/\Delta t$$

It is added every detection time Δt upon addition and is subtracted every detection time Δt upon subtraction.

Here, a trial calculation will be performed by giving an actual example.

When t1 = 5 (s), t2 = 20 (s), t3 = 30 (s), n150 = 150 (%), n120 = 120 (%), n180 = 180 (%), and these numerical values are substituted for the above formula (1), the square time product of the detected current effective value in the interval 0-t3 comes to Ie = [{$150^2$*5 + $120^2$*(20 - 5) + $180^2$*(30 - 20)}/30]$^{1/2}$ ≒ 148 (%).

That is, although the overload state in the interval 0-t3 is a state in which 150 (%) overload lasts for 5 (s), 120 (%) overload lasts for 15 (s) and 180 (%) overload lasts for 10 (s), it means that when it is obtained as constant continuous load under which heat generation equal to mean heat generation in the above interval occurs, it is equivalent to lasting of about 148 (%) overload for 30 (s). Thus, subtraction of a weighted value in the interval t3-t4 during which the overload is released is executed with the value nd1 commensurate with the 148 (%) overload.

Since subtraction is performed on the electronic counter with a weighted value for a heating value corresponding to mean heat generation in overload, it becomes possible to match the actual temperature which is gradually dropping by heat radiation from the AC motor with the integrated value of the electronic counter.

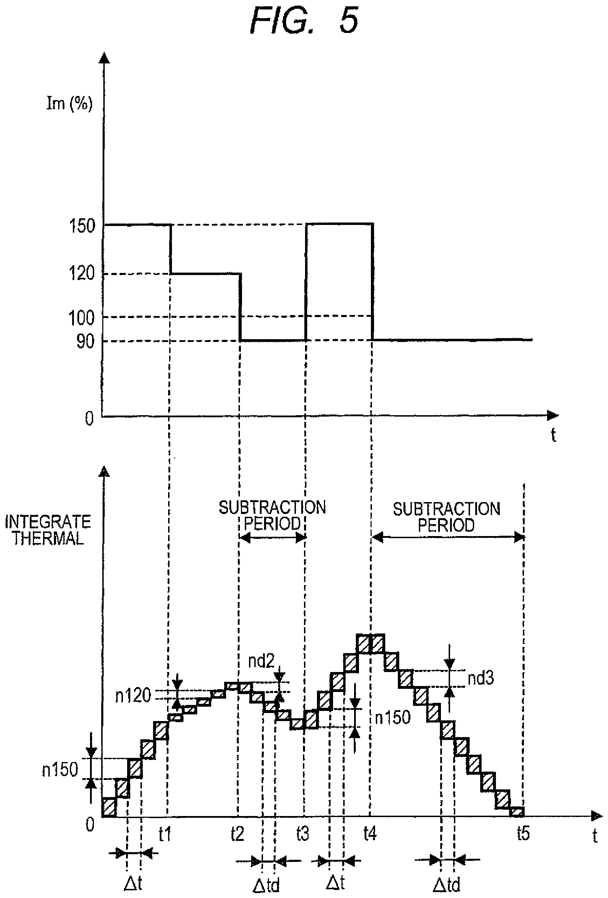

Fig. 5 shows an operating state of an electronic counter to which a subtracting function is added, showing a second embodiment of the present invention. Although in the embodiment 1 in Fig. 4, addition and subtraction of the weighted value upon addition of the electronic counter are performed with the previously set heat time limit numerical value every detection time Δt which is commonly adopted, a point of the embodiment 2 shown in Fig. 5 lies in that addition of a weighted value upon integration of the electronic counter is performed every detection time Δt and subtraction thereof is performed every detection time Δtd, that is, the current detection times are made different from each other between addition and subtraction. The reason why the detection time upon addition is made different from that upon subtraction lies in that, in general, a heat time constant when a temperature rises is different from a heat time constant when the temperature drops and this point is incorporated.

This means that, for example, if the heat time constant upon temperature drop of the AC motor 4 is larger than the heat time constant upon temperature rise, the current detection time Δtd upon the subtraction can be made larger than the current detection time Δt upon the addition. That the heat time constant is large means that the temperature changes gently taking much time, and it goes without saying that a downward temperature change of the AC motor is also gentle. Thus, if the heat time constant is large, it becomes possible to slowly detect the current of the AC motor and the current detection time Δtd upon the subtraction can be prolonged.

Taking a quantitative numerical value by way of example, when the current detection time Δt upon addition comes every 100 ms, every 100 ms execution is not necessary as the current detection time Δtd for subtraction, which means that every 500 ms execution is sufficient.

As a matter of course, since it means that the faster the current detection time is, the larger the load on a microcomputer (a CPU) loaded on the above-mentioned control unit 5 that detects the current of the AC motor and performs arithmetic operation by taking in its detected value becomes (the heavier the load factor of the microcomputer becomes), it is desirable to determine the current detection times Δt and Δtd conforming to the actual conditions of the heat time constant of the AC motor 4.

In Fig. 5, the weighted value upon addition of the electronic counter in an overload period (an interval 0-t1) during which the detected current ratio is 150% continues to be added with a weighted value of a heat time limit numerical value n150 which is previously set every detection time Δt and continues to be added to the accumulative integrated value $n150*t1/\Delta t$ of the electronic counter in the interval 0-t1 in an overload period (an interval t1-t2) during which the detected current ratio is 120%, and hence the accumulative integrated value at the time t2 comes to $Nt = \{n150*t1/\Delta t\} + n120*(t2 - t1)/\Delta t$.

In addition, since in an interval t2-t3, the overload operation is released and the detected current ratio is reduced to 90% (not more than 100%), temperature rise due to the overload state in the interval from 0 up to t2 of the AC motor is stopped and the temperature drops by heat radiation. Therefore, in the interval (t2-t3) during which the temperature drops, the above accumulative integrated value $Nt = \{n150*t1/\Delta t + n120*(t2 - t1)/\Delta t\}$ is not maintained and is subtracted in accordance with a weighted value commensurate with the square time product (the above formula (1)) of the detected current ratio in the interval from 0 up to t2, and the accumulative integrated value at the time t3 comes to $Nt = \{n150*t1/\Delta t + n120*(t2 - t1)/\Delta t\} - nd2*(t3 - t2)/\Delta td$.

Further, in an interval t3-t4, since overload operation in which the detected current ratio is 150% is again performed, it continues to be added to the accumulative integrated value $Nt = \{n150*t1/\Delta t + n120*(t2 - t1)/\Delta t - nd2*(t3 - t2)/\Delta td\}$ in the interval from 0 up to t3 with the weighted value of the heat time limit numerical value n150 in the interval t3-t4, and the accumulative integrated value in an interval from 0 up to t4 comes to $Nt = \{n150*t1/\Delta t + n120*(t2 - t1)/\Delta t - nd2*(t3 - t2)/\Delta td\} + n150*(t4 - t3)/\Delta t$.

In an interval t4-t5, since the overload is again released and the detected current ratio is reduced to 90% (not more than 100%), temperature rise of the AC motor due to the overload state in the interval from t3 up to t4 is stopped and it drops by heat radiation. Thus, in the temperature dropping interval (t4-t5), the above-mentioned accumulative integrated value $\{n150*t1/\Delta t + n120*(t2 - t1)/\Delta t - nd2*(t3 - t2)/\Delta td + n150*(t4 - t3)/\Delta t\}$ is not maintained and is subtracted in accordance with a weighted value commensurate with the square time product (the above formula (1)) of the detected current ratio in the interval from t3 up to t4, and the accumulative integrated value comes to $Nt = \{n150*t1/\Delta t + n120*(t2 - t1)/\Delta t - nd2*(t3 - t2)/\Delta td + n150*(t4 - t3)/\Delta t\} - nd3*(t5 - t4)/\Delta td$.

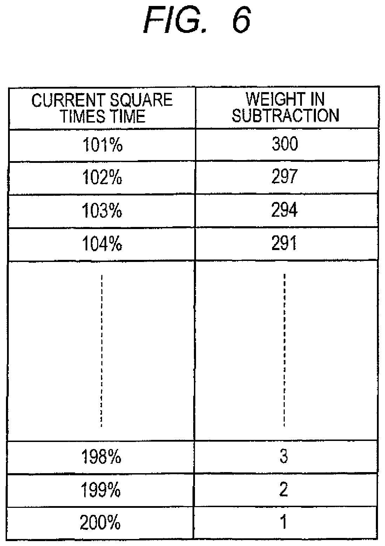

Fig. 6 is an embodiment of the present invention which is shown to describe a weighted value nd2 upon the subtraction. There are shown numerical values (decimal numbers) readily indicating correlations between weighted values upon subtraction and current square time products and it is important that the weighted values upon subtraction be reduced as arithmetic values of the current square time products are increased.

This correlative value is shown for ready understanding and it is apparent that it is not limited to this value. In the case that this correlative value is stored in a memory or the like in advance, these numerical values are naturally stored as numerical values which are converted to binary numbers.

In the case that the arithmetic value of the current square time product in the above overload period is low, since temperature rise of the above AC motor is small, it is liable to be cooled by heat radiation and hence a weighted value for subtraction thereof is increased. In opposition, in the case that the arithmetic value of the current square time product in the overload period is high, since temperature rise of the above AC motor is high, it is hardly cooled by heat radiation and hence the weighted value for subtraction thereof is made small. That is, this is because it is set such that the accumulative integrated value Nt indicating the temperature history of the AC motor becomes the same as the actual temperature of the AC motor.

In the case that the arithmetic value of the current square time product of the AC motor in the overload period is high, the load on the AC motor is large and hence temperature rise of the AC motor naturally becomes high. Thus, in the case that the arithmetic value of the above current square time product is high, when the weighted value for subtraction is made large, the accumulative integrated value indicating the temperature history of the above AC motor is made small by being subtracted with a large weighted value, and when it enters the overload state in the next, a large difference is generated between the actual temperature of the AC motor and the accumulative integrated value of the electronic counter after subtraction indicating the temperature history, the electronic heat time limit unit 5b which is originally disposed to protect the AC motor in overload does not work to bring the AC motor into a situation that it cannot be protected against temperature rise.

Thus, this is because when the arithmetic value of the current square time product is high, it is necessary to make small the weighted value for subtraction such that the accumulative integrated value after subtraction indicating the temperature history of the AC motor becomes the same as the actual temperature of the AC motor.

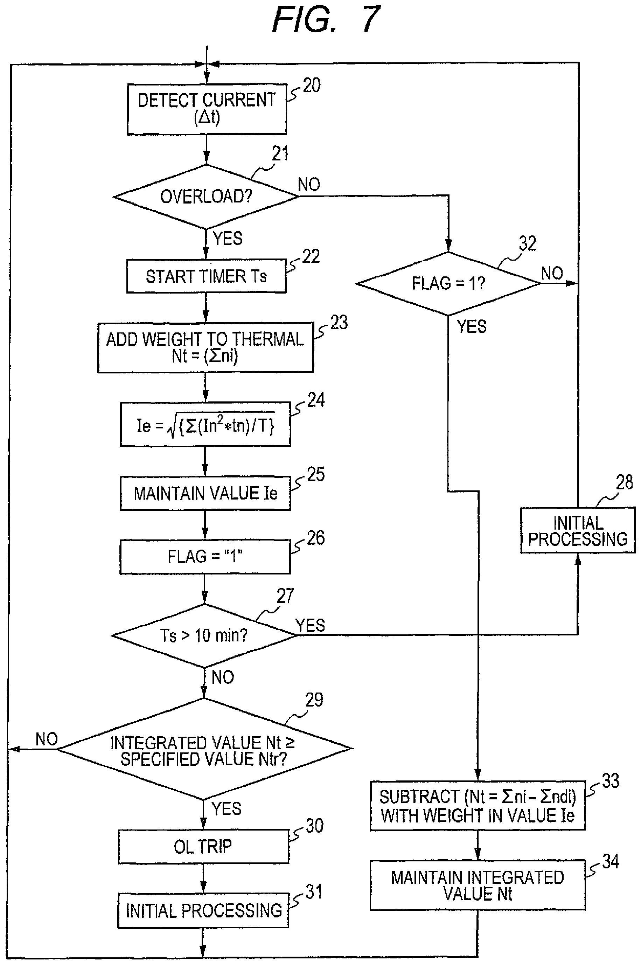

Fig. 7 is a flowchart of adding and subtracting operations of the adding/subtracting unit 5a of an electronic counter to which subtraction is added in an embodiment of the present invention.

A primary current of the AC motor 4 is detected every time $\Delta t$ in Step (S) 20, it is determined whether it is in an overload state on the basis of the detected current ratio (S21), a timer Ts is started when it is in the overload state (S22), and a weighted value upon addition of the electronic counter is added as Nt = $\sum ni$ in accordance with the detected current ratio in the overload state (S23).

The above-mentioned ni indicates n150, n120, n180 and the like which are weighted values for the detected current ratio, for example, in Fig. 4 in a general form.

Further, the square time product Ie of the detected current effective value indicated by the formula (1) is arithmetically operated (S24), the Ie value is stored in a memory (S25), and "1" is put up as a flag (S26). Next, the weighted value of the accumulatively integrated electronic counter is cleared when the time of the timer Ts exceeds 10 minutes which is a previously determined time (S28). It is also configured such that when it does not exceed 10 minutes and the integrated value Nt so accumulatively integrated exceeds a previously determined numerical value Ntr (S29), the AC motor is considered to be in the overload state and the overload trip (OL Trip) operates (S30) to stop the operation of the inverter. Although the previously determined time Ts is set as 10 minutes in the present embodiment, it is not necessary to adhere to this time.

Further, when the value of the accumulatively integrated electronic counter is less than the previously determined numerical value Ntr, the primary current of the AC motor is again detected every time $\Delta t$ in S20 and it is determined whether it is in the overload state on the basis of the detected current ratio (S21), when it is not in the overload state, it is confirmed whether the flag is "1" (S32), when it is "1", it is determined that the overload state has ever occurred, it is subtracted (Nt = $\sum ni - \sum ndi$) from the accumulated integrated value $\sum ni$ every constant time with a previously determined weighted value ndi for the square time product Ie value of the detected current effective value (S33), and this result is held in the memory as a new electronic counter integrated value Nt (S34).

According to the present embodiment, the electronic counter is adapted to detect the current of the AC motor and to discriminate the overload state of the AC motor in accordance with the magnitude of the current value to protect it using the integrating heat time limit characteristic.

In the case that the AC motor is not overloaded for the electronic counter integrated heat time limit characteristic which is installed in advance in the inverter for protection of the AC motor against overload-caused heat generation, since the overload detecting operation is advanced and overprotective device stop can be prevented by configuring to perform subtraction from the above electronic counter integrated value in accordance with the load ratio of the AC motor from the electronic counter integrated heat time limit characteristic, overheat-protective sudden stop due to overload abnormality is eliminated.

Therefore, the equipment is stopped for the overheat-protective stop time and hence such an effect is attained that the non-working time of the equipment can be remarkably reduced.

DESCRIPTION OF REFERENCE NUMERALS

1 ... power rectifier, 2 ... smoothing capacitor, 3 ... power inverter, 4 ... AC motor, 5 ... control unit, 5a ... adding/subtracting unit, 5b ... electronic heat time limit unit, 6 ... cooling fan, 7 ... digital operation panel, 8 ... temperature detector, 9 ... drive circuit, 10 ... current detector, 11 ... resistor, Im ... detected current ratio (%), s ... unit second of time, nIm ... weighted value upon addition of the adding/subtracting unit corresponding to the detected current ratio Im (%) in overload of the AC motor, ndi ... weighted value upon subtraction of the adding/subtracting unit corresponding to a square time product Ie of the detected current ratio in overload of the AC motor.

**Claims**

1. An inverter comprising:

   a power rectifier (1) arranged to rectify AC power from an AC power supply and to convert it into DC power,
   a power inverter (3) arranged to convert the DC power into variable voltage variable frequency AC power,
   a current detector (10) arranged to detect an electric current of an AC motor that is speed-controlled with the AC power output from the power inverter (3), and
   a control unit (5) arranged to control the power rectifier (1) and the power inverter (3) in accordance with the electric current detected by the current detector (10),
   **characterized in that**:

   the control unit (5) has an adding/subtracting unit (5a) that is arranged electronically to:

   when the AC motor is in an overload operation, perform addition with a weighted value according to the electric current detected by the current detector (10) in the overload operation of the AC motor; and when the AC motor is not in an overload operation, perform subtraction, from an integrated value that was obtained by addition when the AC motor was in the overload operation, with a weighted value commensurate with the current squared times time of the electric current detected by the current detector (10) when the AC motor was in the overload operation, and

   the control unit (5) further has an electronic heat time limit unit (5b) that stops the AC motor when the AC motor is in the overload operation on the basis of the integrated value in the adding/subtracting unit (5a) and a previously set electronic heat time limit characteristic.

2. The inverter according to Claim 1, wherein:
   the adding/subtracting unit (5a) is arranged to execute addition and subtraction every constant time on the basis of the magnitude of the electric current detected by the current detector (10).

3. The inverter according to Claim 1 or 2, wherein:
   the adding/subtracting unit (5a) is arranged to execute addition every constant time upon addition and to execute subtraction upon subtraction every constant time which is different from the constant time upon addition on the basis of the magnitude of the electric current detected by the current detector (10).

4. The inverter according to Claim 3, wherein:
   the adding/subtracting unit (5a) is arranged such that the constant time upon the subtraction is longer than the constant time upon the addition.

5. The inverter according to any one of Claims 1 to 4, wherein:
   the adding/subtracting unit (5a) is arranged to perform subtraction with a smaller weighted value as the square time product value of the electric current detected in the overload becomes larger.

6. The inverter according to any one of Claims 1 to 5, wherein
   the adding/subtracting unit (5a) is arranged to perform addition with a larger weighted value as the electric current detected in the overload becomes larger.

7. An overload protection method of stopping an AC motor in accordance with the degree of overload operation, comprising:

   rectifying AC power from an AC power supply and converting it into DC power, using a power rectifier (1);
   converting the DC power into variable voltage variable frequency AC power, using a power inverter;
   detecting an electric current of an AC motor that is speed-controlled with the AC power output from the power inverter (3), using a current detector (10); and
   controlling the power rectifier (1) and the power inverter (3) in accordance with the electric current detected by the current detector (10), using a control unit (5);
   **characterized in that**:
   the method further comprises:

when the AC motor is in an overload operation, electronically performing addition with a weighted value according to the electric current detected by the current detector (10) in the overload operation of the AC motor; and

when the AC motor is not in an overload operation, performing subtraction, from an integrated value obtained by addition when the AC motor was in the overload operation, with a weighted value commensurate with the current squared times time of the electric current detected by the current detector (10) when the AC motor was in the overload operation, and

stopping, by the control unit (5), the AC motor when the AC motor is in the overload operation on the basis of the integrated value and a previously set electronic heat time limit characteristic.

8. The overload protection method according to Claim 7, wherein:
addition and subtraction are executed by the control unit (5) every constant time on the basis of the magnitude of the electric current detected by the current detector (10).

9. The overload protection method according to Claim 7 or 8, wherein:
addition is executed every constant time upon addition and subtraction is executed upon subtraction every constant time which is different from the constant time upon addition by the control unit (5) on the basis of the magnitude of the electric current detected by the current detector (10).

10. The overload protection method according to Claim 9, wherein:
the constant time upon the subtraction is set longer than the constant time upon the addition by the control unit (5).

11. The overload protection method according to any one of Claims 7 to 10, wherein:
subtraction is performed by the control unit (5) with a smaller weighted value as the current squared times time of the electric current detected in the overload becomes larger.

12. The overload protection method according to any one of Claims 7 to 11, wherein
addition is performed by the control unit (5) with a larger weighted value as the electric current detected in the overload becomes larger.


**Patentansprüche**

1. Wechselrichter, der Folgendes umfasst:

einen Leistungsgleichrichter (1), der angeordnet ist, um Wechselstromleistung von einer Wechselstromleistungsversorgung gleichzurichten und in Gleichstromleistung umzuwandeln,
einen Leistungswechselrichter (3), der angeordnet ist, um die Gleichstromleistung in Wechselstromleistung mit variabler Spannung und variabler Frequenz umzuwandeln,
einen Stromdetektor (10), der angeordnet ist, um einen elektrischen Strom eines Wechselstrommotors zu detektieren, der durch die Wechselstromleistungsausgabe von dem Leistungswechselrichter (3) drehzahlgeregelt ist, und
eine Steuereinheit (5), die angeordnet ist, um den Leistungsgleichrichter (1) und den Leistungswechselrichter (3) in Übereinstimmung mit dem von dem Stromdetektor (10) detektierten elektrischen Strom zu steuern,
**dadurch gekennzeichnet, dass**:

die Steuereinheit (5) eine Addition/Subtraktion-Einheit (5a) aufweist, die elektronisch angeordnet ist, um:

in einem Fall, in dem der Wechselstrommotor in einem Überlastbetrieb ist, eine Addition mit einem gewichteten Wert in Übereinstimmung mit dem von dem Stromdetektor (10) detektierten elektrischen Strom in dem Überlastbetrieb des Wechselstrommotors durchzuführen; und
in einem Fall, in dem der Wechselstrommotor nicht in einem Überlastbetrieb ist, eine Subtraktion von einem integrierten Wert, der durch Addition im Fall des Wechselstrommotors im Überlastbetrieb erhalten wurde, mit einem gewichteten Wert entsprechend dem Strom zum Quadrat mal der Zeitdauer des von dem Stromdetektor (10) detektierten elektrischen Stroms im Fall des Wechselstrommotors im Überlastbetrieb durchzuführen, und dass

die Steuereinheit (5) außerdem eine elektronische Aufheizzeitbegrenzungseinheit (5b) aufweist, die den Wechselstrommotor, wenn der Wechselstrommotor im Überlastbetrieb ist, auf Basis des integrierten Werts in der Addition/Subtraktion-Einheit (5a) und einer zuvor festgelegten elektronischen Aufheizzeitbegrenzungcharakteristik anhält.

2. Wechselrichter nach Anspruch 1, wobei die Addition/Subtraktion-Einheit (5a) angeordnet ist, um auf Basis der Höhe des von dem Stromdetektor (10) detektierten elektrischen Stroms jeweils in einem konstanten Zeitintervall Addition und Subtraktion auszuführen.

3. Wechselrichter nach Anspruch 1 oder 2, wobei die Addition/Subtraktion-Einheit (5a) angeordnet ist, um eine Addition jeweils in konstantem Zeitintervall bei Addition auszuführen und eine Subtraktion jeweils in konstantem Zeitintervall, das sich von dem konstanten Zeitintervall bei der Addition unterscheidet, bei der Subtraktion auf Basis der Höhe des von dem Stromdetektor (10) detektierten elektrischen Stroms auszuführen.

4. Wechselrichter nach Anspruch 3, wobei die Addition/Subtraktion-Einheit (5a) so angeordnet ist, dass das konstante Zeitintervall bei der Subtraktion länger als das konstante Zeitintervall bei der Addition ist.

5. Wechselrichter nach einem der Ansprüche 1 bis 4, wobei die Addition/Subtraktion-Einheit (5a) angeordnet ist, um die Subtraktion mit einem kleineren gewichteten Wert durchzuführen, wenn der Quadrat-Zeitproduktwert des im Überlastbetrieb detektierten elektrischen Stroms größer wird.

6. Wechselrichter nach einem der Ansprüche 1 bis 5, wobei die Addition/Subtraktion-Einheit (5a) angeordnet ist, um die Addition mit einem größeren gewichteten Wert durchzuführen, wenn der im Überlastbetrieb detektierte elektrische Strom größer wird.

7. Überlastschutzverfahren zum Anhalten eines Wechselstrommotors in Übereinstimmung mit dem Ausmaß des Überlastbetriebs, das Folgendes umfasst:

   das Gleichrichten von Wechselstromleistung von einer Wechselstromleistungsversorgung und das Umwandeln davon in Gleichstromleistung unter Verwendung eines Leistungsgleichrichters (1);
   das Umwandeln der Gleichstromleistung in Wechselstromleistung mit variabler Spannung und variabler Frequenz unter Verwendung eines Leistungswechselrichters;
   das Detektieren eines elektrischen Stroms eines Wechselstrommotors, der durch die Wechselstromleistungsausgabe von dem Leistungswechselrichter (3) drehzahlgeregelt ist, unter Verwendung eines Stromdetektors (10); und
   das Steuern des Leistungsgleichrichters (1) und des Leistungswechselrichters (3) in Übereinstimmung mit dem von dem Stromdetektor (10) detektierten elektrischen Strom unter Verwendung einer Steuereinheit (5);
   **dadurch gekennzeichnet, dass** das Verfahren außerdem Folgendes umfasst:

   in einem Fall, in dem der Wechselstrommotor in einem Überlastbetrieb ist, das elektronische Durchführen einer Addition mit einem gewichteten Wert in Übereinstimmung mit dem von dem Stromdetektor (10) detektierten elektrischen Strom in dem Überlastbetrieb des Wechselstrommotors; und
   in einem Fall, in dem der Wechselstrommotor nicht in einem Überlastbetrieb ist, das Durchführen einer Subtraktion von einem integrierten Wert, der durch die Addition im Fall des Wechselstrommotors im Überlastbetrieb erhalten wurde, mit einem gewichteten Wert entsprechend dem Strom zum Quadrat mal der Zeitdauer des von dem Stromdetektor (10) detektierten elektrischen Stroms im Fall des Wechselstrommotors im Überlastbetrieb, und

   das Anhalten des Wechselstrommotors durch die Steuereinheit (5), wenn der Wechselstrommotor im Überlastbetrieb ist, auf Basis des integrierten Werts und einer zuvor festgelegten elektronischen Aufheizzeitbegrenzungcharakteristik.

8. Überlastschutzverfahren nach Anspruch 7, wobei die Addition und Subtraktion von der Steuereinheit (5) auf Basis der Höhe des von dem Stromdetektor (10) detektierten elektrischen Stroms jeweils in einem konstanten Zeitintervall ausgeführt werden.

9. Überlastschutzverfahren nach Anspruch 7 oder 8, wobei die Addition jeweils in einem konstanten Zeitintervall bei der Addition und die Subtraktion jeweils in einem konstanten Zeitintervall, das sich von dem konstanten Zeitintervall bei der Addition unterscheidet, bei der Subtraktion von der Steuereinheit (5) auf Basis der Höhe des von dem Stromdetektor (10) detektierten elektrischen Stroms ausgeführt wird.

**10.** Überlastschutzverfahren nach Anspruch 9, wobei das konstante Zeitintervall bei der Subtraktion von der Steuereinheit (5) länger als das konstante Zeitintervall bei der Addition festgelegt wird.

**11.** Überlastschutzverfahren nach einem der Ansprüche 7 bis 10, wobei die Subtraktion von der Steuereinheit (5) mit einem kleineren gewichteten Wert durchgeführt wird, wenn der Strom zum Quadrat mal der Zeitdauer des im Überlastbetrieb detektierten elektrischen Stroms größer wird.

**12.** Überlastschutzverfahren nach einem der Ansprüche 7 bis 11, wobei die Addition von der Steuereinheit (5) mit einem größeren gewichteten Wert durchgeführt wird, wenn der im Überlastbetrieb detektierte elektrische Strom größer wird.

**Revendications**

**1.** Onduleur comprenant :

un redresseur de courant (1) agencé pour redresser du courant alternatif, CA, provenant d'une alimentation en CA et pour le convertir en courant continu, CC,
un convertisseur de courant (3) agencé pour convertir le CC en CA à fréquence variable et tension variable,
un détecteur de courant (10) agencé pour détecter un courant électrique d'un moteur à CA qui est commandé en vitesse avec la sortie de CA provenant du convertisseur de courant (3), et
une unité de commande (5) agencée pour commander le redresseur de courant (1) et le convertisseur de courant (3) conformément au courant électrique détecté par le détecteur de courant (10),
**caractérisé en ce que** :

l'unité de commande (5) a une unité d'addition/soustraction (5a) qui est agencée électroniquement pour :

lorsque le moteur CA est dans une opération de surcharge, effectuer une addition avec une valeur pondérée en fonction du courant électrique détecté par le détecteur de courant (10) pendant l'opération de surcharge du moteur CA ; et
lorsque le moteur CA n'est pas dans une opération de surcharge, effectuer une soustraction, à partir d'une valeur intégrée qui a été obtenue par addition lorsque le moteur CA était dans l'opération de surcharge, avec une valeur pondérée proportionnelle au temps au carré actuel du courant électrique détecté par le détecteur de courant (10) lorsque le moteur CE était dans l'opération de surcharge, et

l'unité de commande (5) comporte en outre une unité de limitation de temps de chauffage électronique (5b) qui arrête le moteur CA lorsque le moteur CA est dans l'opération de surcharge sur la base de la valeur intégrée dans l'unité d'addition/soustraction (5a) et d'une caractéristique de limitation de temps de chauffage électronique préalablement réglée.

**2.** Onduleur selon la revendication 1, dans lequel :
l'unité d'addition/soustraction (5a) est agencée pour exécuter une addition et une soustraction à chaque temps constant sur la base de l'amplitude du courant électrique détecté par le détecteur de courant (10).

**3.** Onduleur selon la revendication 1 ou 2, dans lequel :
l'unité d'addition/soustraction (5a) est agencée pour exécuter une addition à chaque temps constant lors d'une addition et pour exécuter une soustraction lors d'une soustraction à chaque temps constant qui est différent du temps constant lors d'une addition sur la base de l'amplitude du courant électrique détecté par le détecteur de courant (10).

**4.** Onduleur selon la revendication 3, dans lequel :
l'unité d'addition/soustraction (5a) est agencée de telle sorte que le temps constant lors de la soustraction est plus long que le temps constant lors de l'addition.

**5.** Onduleur selon l'une quelconque des revendications 1 à 4, dans lequel :
l'unité d'addition/soustraction (5a) est agencée pour effectuer une soustraction avec une valeur pondérée plus petite lorsque la valeur de produit de temps carré du courant électrique détecté dans la surcharge devient plus grande.

6. Onduleur selon l'une quelconque des revendications 1 à 5, dans lequel
l'unité d'addition/soustraction (5a) est agencée pour effectuer une addition avec une valeur pondérée plus grande lorsque le courant électrique détecté dans la surcharge devient plus grand.

7. Procédé de protection contre une surcharge pour arrêter un moteur CA conformément au degré d'opération de surcharge, comprenant les étapes consistant à :

redresser du CA provenant d'une alimentation en CA et le convertir en CC, à l'aide d'un redresseur de courant (1) ;
convertir le CC en CA à tension variable et fréquence variable, à l'aide d'un convertisseur de courant ;
détecter un courant électrique d'un moteur CA qui est commandé en vitesse avec la sortie de CA du convertisseur de courant (3), à l'aide d'un détecteur de courant (10) ; et
commander le redresseur de puissance (1) et le convertisseur de courant (3) conformément au courant électrique détecté par le détecteur de courant (10), en utilisant une unité de commande (5) ;
**caractérisé en ce que** :
le procédé comprenant en outre :

lorsque le moteur CA est dans une opération de surcharge, effectuer électroniquement une addition avec une valeur pondérée en fonction du courant électrique détecté par le détecteur de courant (10) pendant l'opération de surcharge du moteur CA ; et
lorsque le moteur CA n'est pas dans une opération de surcharge, effectuer une soustraction, à partir d'une valeur intégrée obtenue par addition lorsque le moteur CA était pendant l'opération de surcharge, avec une valeur pondérée proportionnelle au temps au carré actuel du courant électrique détecté par le détecteur de courant (10) lorsque le moteur CA était dans l'opération de surcharge, et
arrêter, via l'unité de commande (5), le moteur CA lorsque le moteur CA est dans l'opération de surcharge sur la base de la valeur intégrée et d'une caractéristique de limite de temps de chauffage électronique préalablement réglée.

8. Procédé de protection contre une surcharge selon la revendication 7, dans lequel :
l'addition et la soustraction sont exécutées par l'unité de commande (5) à chaque temps constant sur la base de l'amplitude du courant électrique détecté par le détecteur de courant (10).

9. Procédé de protection contre une surcharge selon la revendication 7 ou 8, dans lequel :
l'addition est exécutée à chaque temps constant lorsqu'une addition et soustraction est exécutée lors de la soustraction à chaque temps constant qui est différent du temps constant lors de l'addition par l'unité de commande (5) sur la base de l'amplitude du courant électrique détecté par le détecteur de courant (10).

10. Procédé de protection contre une surcharge selon la revendication 9, dans lequel :
le temps constant lors de la soustraction est réglé plus long que le temps constant lors de l'addition par l'unité de commande (5).

11. Procédé de protection contre les surcharges selon l'une quelconque des revendications 7 à 10, dans lequel :
la soustraction est effectuée par l'unité de commande (5) avec une valeur pondérée plus petite à mesure que le temps au carré actuel du courant électrique détecté dans la surcharge devient plus grand.

12. Procédé de protection contre une surcharge selon l'une quelconque des revendications 7 à 11, dans lequel
une addition est effectuée par l'unité de commande (5) avec une valeur pondérée plus grande lorsque le courant électrique détecté dans la surcharge devient plus grand.

# FIG. 1

EP 2 544 353 B1

# FIG. 2

# FIG. 3

# FIG. 4

# FIG. 5

# FIG. 6

| CURRENT SQUARE TIMES TIME | WEIGHT IN SUBTRACTION |
|---|---|
| 101% | 300 |
| 102% | 297 |
| 103% | 294 |
| 104% | 291 |
| ⋮ | ⋮ |
| 198% | 3 |
| 199% | 2 |
| 200% | 1 |

# FIG. 7

DETECT CURRENT (Δt) — 20

OVERLOAD? — 21

START TIMER Ts — 22

ADD WEIGHT TO THERMAL
$Nt = (\Sigma ni)$ — 23

$Ie = \sqrt{\{\Sigma (In^2 * tn)/T\}}$ — 24

MAINTAIN VALUE Ie — 25

FLAG = "1" — 26

Ts > 10 min? — 27

INTEGRATED VALUE Nt ≥
SPECIFIED VALUE Ntr? — 29

OL TRIP — 30

INITIAL PROCESSING — 31

FLAG = 1? — 32

INITIAL PROCESSING — 28

SUBTRACT ($Nt = \Sigma ni - \Sigma ndi$)
WITH WEIGHT IN VALUE Ie — 33

MAINTAIN INTEGRATED
VALUE Nt — 34

**REFERENCES CITED IN THE DESCRIPTION**

**Patent documents cited in the description**

- GB 2119591 A
- JP 6253593 A
- JP 5022837 A
- JP 2004173347 A
- JP 2007166696 A